# EUROPÄISCHE PATENTSCHRIFT

(11) **EP 3 412 128 B1**
(45) Veröffentlichungstag und Bekanntmachung des Hinweises auf die Patenterteilung: **12.05.2021**
(21) Anmeldenummer: 17175379.1
(22) Anmeldetag: 09.06.2017
(51) Int. Cl.: A01D 34/00, A01D 34/416

(54) **GRÜNFLÄCHENBEARBEITUNGSSYSTEM UND VERFAHREN ZUM ERFASSEN MINDESTENS EINES ABSCHNITTS EINES BEGRENZUNGSRANDS EINER ZU BEARBEITENDEN FLÄCHE**
GREEN AREAS PROCESSING SYSTEM AND METHOD FOR THE DETECTION OF AT LEAST ONE SECTION OF A LIMITING EDGE OF A SURFACE TO BE PROCESSED
SYSTÈME DE TRAITEMENT D'ESPACES VERTS ET PROCÉDÉ DE DÉTECTION D'AU MOINS UNE PARTIE D'UN BORD PÉRIPHÉRIQUE D'UNE SURFACE À TRAITER

(43) Veröffentlichungstag der Anmeldung: 12.12.2018
(73) Patentinhaber: Andreas Stihl AG & Co. KG, 71336 Waiblingen (DE)
(72) Erfinder: Hans, Matthias, 83088 Kiefersfelden (DE); Heinzelmann, Georg, 71364 Winnenden (DE); Oesterle, Markus, 71566 Althütte (DE); Totschnig, Andreas, 6380 St. Johann in Tirol (AT)
(74) Vertreter: Patentanwälte Ruff, Wilhelm, Beier, Dauster & Partner mbB

(56) Entgegenhaltungen:
- EP-A1- 1 016 946
- EP-A1- 2 926 642
- EP-A2- 2 806 325
- WO-A1-2011/115536

## Beschreibung

### ANWENDUNGSGEBIET UND STAND DER TECHNIK

Die Erfindung bezieht sich auf ein Grünflächenbearbeitungssystem und ein Verfahren zum Erfassen mindestens eines Abschnitts eines Begrenzungsrands einer zu bearbeitenden Fläche mittels eines solchen Grünflächenbearbeitungssystems.

Bekannt ist ein Grünflächenbearbeitungssystem mit einem Rasenmähroboter.

Insbesondere ist aus der EP 1 016 946 A1 ein Roboterrasenmäher mit einer Schneidklinge bekannt. Der Roboter weist zwei autonome Modi, nämlich "autonomous" und "edge cutting", und einen manuellen Modus auf. Des Weiteren offenbart die EP 1 016 946 A1 ein Kontrollfeld zum Einstellen der autonomen Modi und eine Kontrolleinheit zum Kontrollieren des manuellen Modus. Im autonomen "edge cutting"-Modus mäht der Roboter entlang Grenzen. Der manuelle Modus ermöglicht, den Roboter in Gebieten zu betreiben, welche für den Roboter in seinen autonomen Modi nicht zugänglich sind.

Außerdem ist aus der WO 2011/115536 A1 ein autonomer Roboterrasenmäher mit einer Hauptschneideeinheit und einer Trimmereinheit zum Kantenschneiden bekannt. Die Trimmereinheit ist dazu eingerichtet, automatisch zwischen einem aktiven Zustand und einem passiven Zustand zu wechseln. In dem passiven Zustand führt die Trimmereinheit kein Schneiden durch und in dem aktiven Zustand führt die Trimmereinheit ein Schneiden durch.

### AUFGABE UND LÖSUNG

Der Erfindung liegt als Aufgabe die Bereitstellung eines Grünflächenbearbeitungssystems zugrunde, das verbesserte Eigenschaften aufweist, insbesondere mehr Funktionalitäten. Des Weiteren liegt der Erfindung als Aufgabe die Bereitstellung eines Verfahrens zum Erfassen mindestens eines Abschnitts eines Begrenzungsrands einer zu bearbeitenden Fläche zugrunde.

Die Erfindung löst diese Aufgabe durch die Bereitstellung eines Grünflächenbearbeitungssystems mit den Merkmalen des Anspruchs 1. Des Weiteren wird die der Erfindung zugrundeliegende Aufgabe durch ein Verfahren mit den Merkmalen des Anspruchs 12 gelöst. Vorteilhafte Weiterbildungen und/oder Ausgestaltungen der Erfindung sind in den abhängigen Ansprüchen beschrieben.

Das erfindungsgemäße Grünflächenbearbeitungssystem weist einen autonomen mobilen Grünflächenbearbeitungsroboter mit einem Bearbeitungswerkzeug, ein von dem Bearbeitungswerkzeug verschiedenes Schneidwerkzeug, eine Benutzersteuerungseinrichtung, einen Autonombetriebsmodus und einen Schneidbetriebsmodus sowie eine Betriebsmodusumschalteinrichtung auf. Der Grünflächenbearbeitungsroboter und das Schneidwerkzeug sind zur Befestigung des Schneidwerkzeugs an dem Grünflächenbearbeitungsroboter ausgebildet. In dem Autonombetriebsmodus arbeitet der autonome mobile Grünflächenbearbeitungsroboter mit seinem Bearbeitungswerkzeug autonom und das Schneidwerkzeug ist außer Betrieb gesetzt. In dem Schneidbetriebsmodus ist das Schneidwerkzeug an dem Grünflächenbearbeitungsroboter befestigt und betriebsbereit und der Grünflächenbearbeitungsroboter mit seinem Bearbeitungswerkzeug und das Schneidwerkzeug sind mittels der Benutzersteuerungseinrichtung durch einen Benutzer gesteuert. Die Betriebsmodusumschalteinrichtung ist zur Umschaltung, insbesondere zur automatischen Umschaltung, zwischen dem Autonombetriebsmodus und dem Schneidbetriebsmodus ausgebildet.

Das Grünflächenbearbeitungssystem ermöglicht einerseits in seinem Autonombetriebsmodus eine autonome Bearbeitung einer zu bearbeitenden Fläche mittels des autonomen mobilen Grünflächenbearbeitungsroboters mit seinem Bearbeitungswerkzeug. Andererseits ermöglicht das Grünflächenbearbeitungssystem in seinem Schneidbetriebsmodus mindestens einen Bereich der zu bearbeitenden Fläche, insbesondere einen Randbereich und/oder Kantenbereich, oder die zu bearbeitende Fläche vollständig mittels des Grünflächenbearbeitungsroboters mit seinem Bearbeitungswerkzeug und des Schneidwerkzeugs zu bearbeiten. Der Schneidbetriebsmodus kann ermöglichen, die zu bearbeitende Fläche auf eine Art und Weise zu bearbeiten, wie es im Autonombetriebsmodus nicht möglich, erlaubt und/oder zulässig sein kann und/oder darf.

Die zu bearbeitende Fläche kann beispielsweise eine Freifläche, insbesondere ein unversiegelter Boden, oder eine Grünfläche sein, wie eine Wiese mit Rasen.

Autonom arbeiten kann bedeuten, dass der autonome mobile Grünflächenbearbeitungsroboter dazu ausgebildet sein kann, sich auf der zur bearbeitenden Fläche, die vorgegeben sein kann, und/oder in seiner Umgebung selbstständig, selbsttätig, selbstbestimmt, selbstgesteuert und/oder unabhängig von dem Benutzer zu bewegen und/oder zu agieren und/oder zumindest einen Parameter, wie insbesondere einen Streckenparameter, und/oder einen Umkehrpunkt auszuwählen. Autonom arbeiten kann zusätzlich oder alternativ bedeuten, dass der Grünflächenbearbeitungsroboter dazu ausgebildet sein kann, selbstständig mit einem Arbeiten zu beginnen und/oder das Arbeiten zu beenden. In dem Autonombetriebsmodus braucht der Grünflächenbearbeitungsroboter nicht durch den Benutzer gesteuert zu sein, insbesondere nicht ferngesteuert. In anderen Worten: in dem Autonombetriebsmodus kann der Grünflächenbearbeitungsroboter insbesondere ohne menschliche Steuerung und/oder Führung arbeiten. Der autonome mobile Grünflächenbearbeitungsroboter kann als Serviceroboter und/oder Dienstleistungsroboter bezeichnet werden.

Außer Betrieb gesetzt sein kann bedeuten, dass das Schneidwerkzeug nicht an dem Grünflächenbearbeitungsroboter befestigt zu sein braucht oder an dem Grünflächenbearbeitungsroboter befestigt sein kann, dann aber nicht arbeiten kann, insbesondere deaktiviert sein kann, von einer Antriebsenergiequelle abgekoppelt sein kann und/oder nicht gesteuert beziehungsweise nicht ansteuerbar sein kann.

Gesteuert sein kann bedeuten, dass eine Bewegung des autonomen mobilen Grünflächenbearbeitungsroboters mit dem daran befestigten Schneidwerkzeug, ein Betrieb des Bearbeitungswerkzeugs und/oder ein Betrieb des Schneidwerkzeugs gesteuert sein kann. Gesteuert sein kann als kontrolliert sein bezeichnet werden.

Der Schneidbetriebsmodus kann als gesteuerter und/oder kontrollierter und/oder manueller Modus und/oder Benutzermodus bezeichnet werden.

Das Grünflächenbearbeitungssystem weist einen Schneidwerkzeugsaufsatz auf. Der Schneidwerkzeugsaufsatz umfasst das Schneidwerkzeug. Der autonome mobile Grünflächenbearbeitungsroboter und der Schneidwerkzeugsaufsatz sind zur lösbaren Befestigung des Schneidwerkzeugsaufsatzes an dem Grünflächenbearbeitungsroboter ausgebildet, insbesondere zur wiederlösbaren, zerstörungsfreien und/oder werkzeugfreien Befestigung. Der Schneidwerkzeugsaufsatz kann als Anbauschneidwerkzeugaufsatz bezeichnet werden.

Die Betriebsmodusumschalteinrichtung ist dazu ausgebildet, eine Befestigung des Schneidwerkzeugsaufsatzes an dem autonomen mobilen Grünflächenbearbeitungsroboter zu erkennen und, insbesondere in Folge dessen, das Grünflächenbearbeitungssystem in den Schneidbetriebsmodus umzuschalten. Zusätzlich oder alternativ ist die Betriebsmodusumschalteinrichtung dazu ausgebildet, eine Lösung oder ein Lösen des Schneidwerkzeugsaufsatzes von dem Grünflächenbearbeitungsroboter zu erkennen und, insbesondere in Folge dessen, das Grünflächenbearbeitungssystem in den Autonombetriebsmodus umzuschalten. Insbesondere kann das Grünflächenbearbeitungssystem dazu ausgebildet sein, nur in dem Schneidbetriebsmodus zu sein, wenn das Schneidwerkzeug an dem autonomen mobilen Grünflächenbearbeitungsroboter befestigt ist. Insbesondere kann eine Umschaltung in den Autonombetriebsmodus gesperrt sein.

In einer Weiterbildung der Erfindung umfasst das Schneidwerkzeug mindestens ein Schneidelement. Das Grünflächenbearbeitungssystem ist derart ausgebildet, dass das Schneidwerkzeug in dem Schneidbetriebsmodus derart steuerbar beziehungsweise betreibbar ist oder gesteuert sein kann oder darf, dass eine maximale kinetische Energie des Schneidelements größer als 10 Joule ist. Die relativ hohe kinetische Energie des Schneidelements kann ermöglichen, die zu bearbeitende Fläche auf eine Art und Weise zu bearbeiten, wie es im Autonombetriebsmodus nicht möglich, erlaubt und/oder zulässig sein kann und/oder darf. Insbesondere kann das Schneidelement als ein rotierendes Schneidelement ausgebildet sein. Die maximale kinetische Energie kann eine maximale Rotationsenergie sein.

In einer Weiterbildung der Erfindung umfasst das Schneidwerkzeug mindestens einen Mähfaden, mindestens ein Kunststoffmesser, mindestens ein Metallmesser oder ein Metallschneideblatt mit mindestens einer Schneidkante und/oder mit mindestens einem Schneidezahn. Dies kann ein Schneiden von Gras, krautigen Pflanzen, holzigem Gestrüpp oder kleineren Gehölzen mittels des Schneidwerkzeugs ermöglichen. Vorteilhafterweise kann das Schneidwerkzeug als ein rotierendes Schneidwerkzeug und dazu ausgebildet sein, das zu schneidende Gut im sogenannten Freischnittverfahren ohne Gegenschneide zu schneiden, insbesondere durch Zentrifugalkraft des Schneidwerkzeugs einen Schneidvorgang zu erzeugen. Insbesondere kann das Schneidwerkzeug als Motorsense, Freischneider, Grastrimmer und/oder Rasentrimmer bezeichnet werden.

In einer Weiterbildung der Erfindung ist der autonome mobile Grünflächenbearbeitungsroboter als ein Rasenmähroboter ausgebildet. Das Bearbeitungswerkzeug ist als ein Rasenmähwerkzeug ausgebildet. Insbesondere kann der Grünflächenbearbeitungsroboter als ein Mulchmähroboter ausgebildet sein. Vorteilhafterweise kann das Bearbeitungswerkzeug mindestens einen Mähfaden, mindestens ein Kunststoffmesser, mindestens ein Metallmesser oder ein Metallschneideblatt mit mindestens einer Schneidkante und/oder mit mindestens einem Schneidezahn umfassen.

In einer Weiterbildung der Erfindung weist der autonome mobile Grünflächenbearbeitungsroboter ein, insbesondere unten, offenes Schutzgehäuse mit einem Seitenrand auf. Das Bearbeitungswerkzeug definiert einen Bearbeitungsbereich und ist derart in dem Schutzgehäuse angeordnet, dass der Bearbeitungsbereich, insbesondere vollständig, in einem Sicherheitsbereich des Schutzgehäuses liegt. Der Sicherheitsbereich weist einen Sicherheitsabstand, insbesondere einen Mindestsicherheitsabstand, zu dem Seitenrand auf. Das Schutzgehäuse und/oder der Sicherheitsabstand können/kann gewährleisten, dass bei Berührung des Grünflächenbearbeitungsroboters mit einem Menschen und/oder einem Tier, dieser beziehungsweise dieses nicht ohne weiteres in Kontakt mit dem im Sicherheitsbereich angeordneten Bearbeitungswerkzeug kommen kann. Dies kann den Autonombetriebsmodus des autonomen mobilen Grünflächenbearbeitungsroboters mit seinem Bearbeitungswerkzeug ermöglichen, erlauben und/oder zulassen. Das Schutzgehäuse kann als Bearbeitungswerkzeugabdeckung bezeichnet werden. Offen kann bedeuten, dass eine Bearbeitung der zu bearbeitenden Fläche mittels des Bearbeitungswerkzeugs möglich sein kann. Vorteilhafterweise kann der Sicherheitsabstand mindestens 4 Zentimeter (cm) betragen, insbesondere mindestens 8 cm, vorteilhafterweise mindestens 15 cm.

Zusätzlich oder alternativ kann der autonome mobile Grünflächenbearbeitungsroboter mindestens einen Hochhebe- und/oder Kippsensor aufweisen, wobei der Hochhebe- und/oder Kippsensor dazu ausgebildet sein kann, ein Hochheben und/oder ein Kippen des Grünflächenbearbeitungsroboters zu erfassen. Der Grünflächenbearbeitungsroboter kann dazu ausgebildet sein, in Abhängigkeit von einem erfassten Hochheben und/oder Kippen das Bearbeitungswerkzeug außer Betrieb zu setzen.

Weiter zusätzlich oder alternativ kann der autonome mobile Grünflächenbearbeitungsroboter mindestens einen Hindernissensor aufweisen, wobei der Hindernissensor dazu ausgebildet sein kann, ein Hindernis zu erfassen. Der Grünflächenbearbeitungsroboter kann dazu ausgebildet sein, in Abhängigkeit von einem erfassten Hindernis das Bearbeitungswerkzeug außer Betrieb zu setzen. Beispielsweise kann das Hindernis ein Mensch und/oder ein Tier sein.

Weiter zusätzlich oder alternativ können/kann der autonome mobile Grünflächenbearbeitungsroboter und/oder sein Bearbeitungswerkzeug derart ausgebildet sein, dass das Bearbeitungswerkzeug bei Berührung und/oder Kontakt mit einem Hindernis ausweicht.

In einer Ausgestaltung der Erfindung definiert das Schneidwerkzeug einen Schneidbereich. In dem Schneidbetriebsmodus ist das Schneidwerkzeug derart an dem autonomen mobilen Grünflächenbearbeitungsroboter befestigt und/oder angeordnet, dass der Schneidbereich mindestens teilweise, insbesondere vollständig, außerhalb des Sicherheitsbereichs liegt. Dies kann ein Schneiden eines Randbereichs der zu bearbeitenden Fläche, insbesondere eines Rasenrands und/oder einer Rasenkante, mittels des Schneidwerkzeugs ermöglichen. Der Schneidbereich kann durch ein Ende des Schneidwerkzeugs definiert sein.

In einer Weiterbildung der Erfindung umfasst die Benutzersteuerungseinrichtung eine Drahtfernsteuerung. Die Drahtfernsteuerung ist zur Drahtsteuerverbindung mit dem autonomen mobilen Grünflächenbearbeitungsroboter und/oder dem Schneidwerkzeug und/oder dem Schneidwerkzeugsaufsatz ausgebildet. Zusätzlich oder alternativ umfasst die Benutzersteuerungseinrichtung einen, insbesondere drahtlosen, Fernsteuerungssender. Der autonome mobile Grünflächenbearbeitungsroboter und/oder das Schneidwerkzeug und/oder der Schneidwerkzeugsaufsatz umfassen/umfasst einen, insbesondere drahtlosen, Fernsteuerungsempfänger. Der Fernsteuerungssender und der Fernsteuerungsempfänger sind zu einer drahtlosen und/oder kabellosen Steuerverbindung ausgebildet, insbesondere zu einer Funkverbindung. Die Benutzersteuerungseinrichtung beziehungsweise ihre Drahtfernsteuerung kann als Steuerkonsole bezeichnet werden. Die Benutzersteuerungseinrichtung beziehungsweise ihr drahtloser Fernsteuerungssender kann ein Mobiltelefon, insbesondere ein Smartphone, und/oder ein Tablet umfassen oder sein. Insbesondere kann die drahtlose Steuerverbindung unmittelbar beziehungsweise direkt zwischen dem Fernsteuerungssender und dem Fernsteuerungsempfänger sein oder mittelbar beziehungsweise indirekt über beispielsweise eine Basisstation für den autonomen mobilen Grünflächenbearbeitungsroboter. Vorteilhafterweise können der autonome mobile Grünflächenbearbeitungsroboter und das Schneidwerkzeug beziehungsweise der Schneidwerkzeugsaufsatz zu einer Steuerverbindung ausgebildet sein.

In einer Ausgestaltung der Erfindung ist die Drahtfernsteuerung zwischen einer Steuerstellung und einer Lagerstellung beweglich, insbesondere verstellbeweglich. Die Betriebsmodusumschalteinrichtung ist dazu ausgebildet, die Steuerstellung zu erkennen und, insbesondere in Folge dessen, das Grünflächenbearbeitungssystem in den Schneidbetriebsmodus umzuschalten und/oder die Lagerstellung zu erkennen und, insbesondere in Folge dessen, das Grünflächenbearbeitungssystem in den Autonombetriebsmodus umzuschalten. Zusätzlich oder alternativ ist die Betriebsmodusumschalteinrichtung dazu ausgebildet, eine Unterbrechung der drahtlosen Steuerverbindung zu erkennen und, insbesondere in Folge dessen, das Grünflächenbearbeitungssystem in den Autonombetriebsmodus umzuschalten. Insbesondere kann die Drahtfernsteuerung in der Lagerstellung in dem autonomen mobilen Grünflächenbearbeitungsroboter aufgenommen sein und in der Steuerstellung herausgenommen oder entnommen sein. Zusätzlich oder alternativ kann das Grünflächenbearbeitungssystem eine an dem Grünflächenbearbeitungsroboter befestigbare und/oder verstellbare Schiebestange, einen Schiebebügel, einen Führungsholm und/oder eine Handführung umfassen und die Drahtfernsteuerung kann daran in der Lagerstellung und/oder in der Steuerstellung befestigt und/oder angeordnet sein. Die Betriebsmodusumschalteinrichtung kann dazu ausgebildet sein, eine Befestigung und/oder eine Verstellung zu erkennen.

In einer Weiterbildung der Erfindung weist das Grünflächenbearbeitungssystem ein Positionsbestimmungsgerät zur Bestimmung von Positionskoordinaten auf. Das Positionsbestimmungsgerät ist an dem autonomen mobilen Grünflächenbearbeitungsroboter und/oder an dem Schneidwerkzeug und/oder an dem Schneidwerkzeugsaufsatz befestigt. Das Grünflächenbearbeitungssystem weist ein Positionsaufzeichnungsgerät auf. Das Positionsaufzeichnungsgerät ist dazu ausgebildet, während der Grünflächenbearbeitungsroboter und das an dem Grünflächenbearbeitungsroboter befestigte Schneidwerkzeug in dem Schneidbetriebsmodus entlang, insbesondere mindestens eines Abschnitts, eines Begrenzungsrands der, insbesondere von dem Grünflächenbearbeitungsroboter, zu bearbeitenden Fläche gesteuert und/oder geführt werden, eine Abfolge von Positionskoordinaten des Begrenzungsrands aufzuzeichnen und/oder zu speichern. Dies kann ein Erfassen, insbesondere des mindestens einen Abschnitts, des Begrenzungsrands der zu bearbeitenden Fläche ermöglichen.

In einer Ausgestaltung der Erfindung umfasst der autonome mobile Grünflächenbearbeitungsroboter das Positionsbestimmungsgerät. Das Grünflächenbearbeitungssystem weist eine Steuereinheit auf. Die Steuereinheit ist dazu ausgebildet, eine Bewegung des Grünflächenbearbeitungsroboters im Autonombetriebsmodus auf der zu bearbeitenden Fläche in Abhängigkeit von der aufgezeichneten Abfolge von Positionskoordinaten, insbesondere mindestens des Abschnitts, des Begrenzungsrands derart zu steuern, dass der Grünflächenbearbeitungsroboter auf der zu bearbeitenden Fläche bleibt, insbesondere innerhalb des Begrenzungsrands.

In einer Ausgestaltung der Erfindung umfasst das Positionsbestimmungsgerät einen Satelliten-Positionsbestimmungsempfänger zur Bestimmung von Positionskoordinaten. Zusätzlich oder alternativ umfasst das Positionsbestimmungsgerät ein lokales Positionierungssystemgerät zur Bestimmung von Positionskoordinaten. Vorteilhafterweise kann der Satelliten-Positionsbestimmungsempfänger für eines oder mehrere Satelliten-Positionsbestimmungssysteme wie NAVSTAR GPS, GLONASS, Galileo und/oder BeiDou ausgebildet sein. Vorteilhafterweise kann das lokale Positionierungssystemgerät auf einer oder mehreren verschiedenen Technologien basieren wie Abstandsmessungen zu Knotenpunkten, optischen Signalen, Radiowellen, magnetischen Feldern, akustischen Signalen, Ultrabreitband, Bluetooth, WLAN, Ultraschall und/oder RFID. Insbesondere kann das lokale Positionierungssystemgerät ein Empfänger und/oder ein Sender sein. Zusätzlich oder alternativ kann das lokale Positionierungssystemgerät ein aktives Element und/oder ein passives Element sein.

Des Weiteren bezieht sich die Erfindung auf ein Verfahren gemäß Anspruch 12.

Dieses Verfahren kann ermöglichen, dass einerseits die Abfolge von Positionskoordinaten mindestens des Abschnitts des Begrenzungsrands der zu bearbeitenden Fläche erfasst werden kann und andererseits mindestens der Abschnitt bearbeitet werden kann. Insbesondere kann der Schritt c) zeitgleich mit den Schritten a) und b) ausgeführt werden und/oder zeitlich nach diesen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Draufsicht auf ein erfindungsgemäßes Grünflächenbearbeitungssystem,
- Fig. 2: eine Unteransicht des Grünflächenbearbeitungssystems der Fig. 1,
- Fig. 3: eine Seitenansicht des Grünflächenbearbeitungssystems der Fig. 1 mit einer Drahtfernsteuerung in einer Lagerstellung,
- Fig. 4: eine weitere Seitenansicht des Grünflächenbearbeitungssystems der Fig. 1 mit der Drahtfernsteuerung in einer Steuerstellung,
- Fig. 5: eine Ansicht einer Benutzersteuerungseinrichtung mit einem drahtlosen Fernsteuerungssender des Grünflächenbearbeitungssystems der Fig. 1,
- Fig. 6: eine Draufsicht auf eine mittels des Grünflächenbearbeitungssystems der Fig. 1 zu bearbeitende Fläche und
- Fig. 7: ein Ablaufdiagramm eines erfindungsgemäßen Verfahrens.

### DETAILLIERTE BESCHREIBUNG DER AUSFÜHRUNGSBEISPIELE

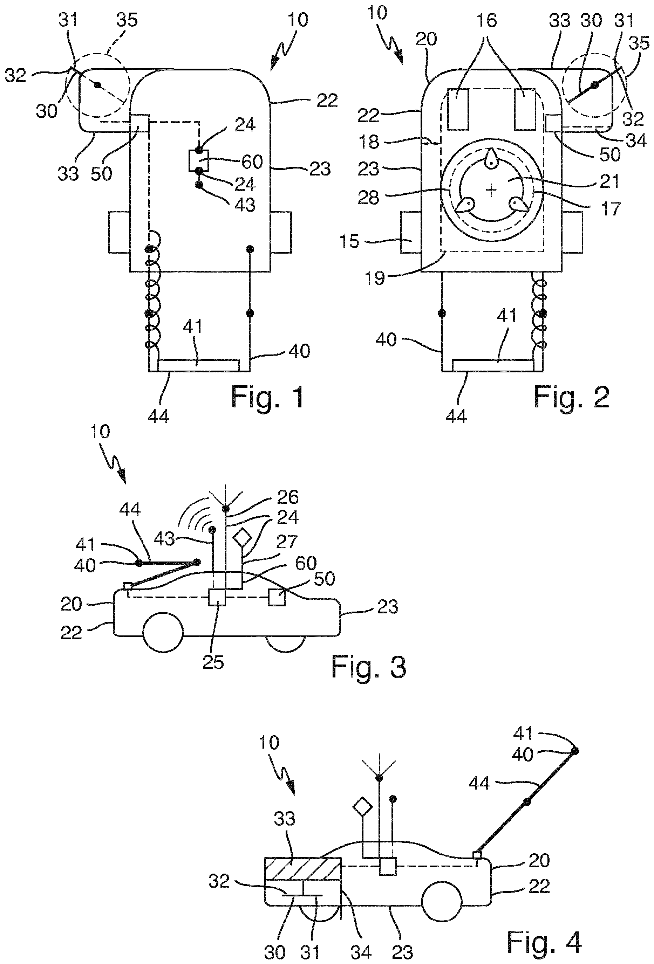

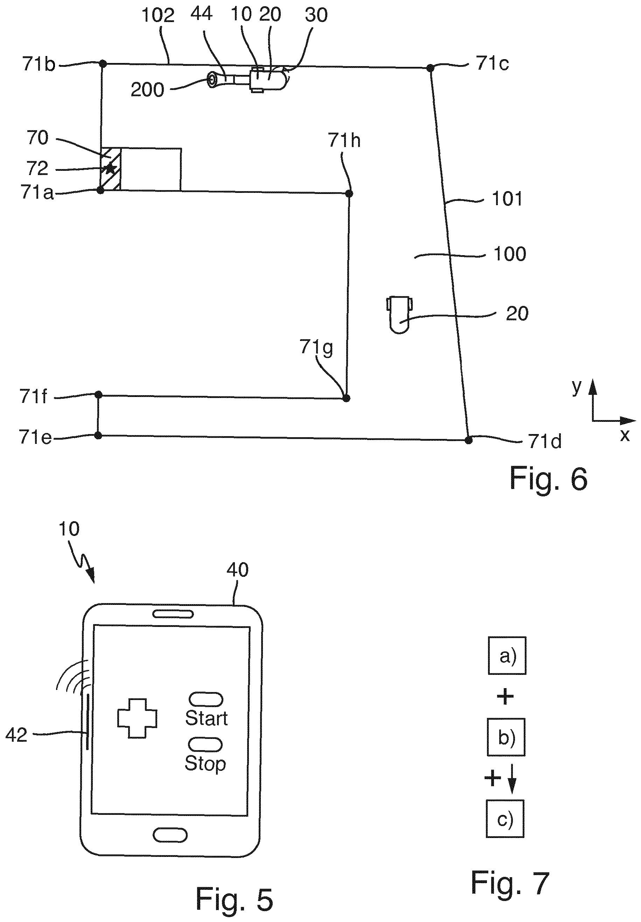

Fig. 1 bis 6 zeigen ein erfindungsgemäßes Grünflächenbearbeitungssystem 10. Das Grünflächenbearbeitungssystem 10 weist einen autonomen mobilen Grünflächenbearbeitungsroboter 20 mit einem Bearbeitungswerkzeug 21, ein von dem Bearbeitungswerkzeug 21 verschiedenes Schneidwerkzeug 30, eine Benutzersteuerungseinrichtung 40, einen Autonombetriebsmodus und einen Schneidbetriebsmodus sowie eine Betriebsmodusumschalteinrichtung 50 auf. Der Grünflächenbearbeitungsroboter 20 und das Schneidwerkzeug 30 sind zur Befestigung des Schneidwerkzeugs 30 an dem Grünflächenbearbeitungsroboter 20 ausgebildet. In Fig. 1 bis 5 und 6 oben ist das Schneidwerkzeug 30 an dem Grünflächenbearbeitungsroboter 20 befestigt. In dem Autonombetriebsmodus arbeitet der autonome mobile Grünflächenbearbeitungsroboter 20 mit seinem Bearbeitungswerkzeug 21 autonom und das Schneidwerkzeug 30 ist außer Betrieb gesetzt, insbesondere ist das Schneidwerkzeug 30 nicht an dem Grünflächenbearbeitungsroboter 20 befestigt, wie in Fig. 6 unten zu erkennen. In dem Schneidbetriebsmodus ist das Schneidwerkzeug 30 an dem Grünflächenbearbeitungsroboter 20 befestigt und betriebsbereit und der Grünflächenbearbeitungsroboter 20 mit seinem Bearbeitungswerkzeug 21 und das Schneidwerkzeug 30 sind mittels der Benutzersteuerungseinrichtung 40 durch einen Benutzer 200 gesteuert, wie in Fig. 6 oben zu erkennen. Die Betriebsmodusumschalteinrichtung 50 ist zur Umschaltung, insbesondere zur automatischen Umschaltung, zwischen dem Autonombetriebsmodus und dem Schneidbetriebsmodus ausgebildet.

Im Detail ist der autonome mobile Grünflächenbearbeitungsroboter 20 als ein Rasenmähroboter ausgebildet, insbesondere als ein Mulchmähroboter. Das Bearbeitungswerkzeug 21 ist als ein Rasenmähwerkzeug ausgebildet. Im gezeigten Ausführungsbeispiel umfasst das Bearbeitungswerkzeug 21 ein Metallschneideblatt mit drei Schneidezähnen. In alternativen Ausführungsbeispielen kann das Bearbeitungswerkzeug nur einen einzigen Schneidezahn, zwei oder mehr als drei Schneidezähne umfassen. Das Bearbeitungswerkzeug 21 ist als ein rotierendes Bearbeitungswerkzeug und dazu ausgebildet, eine zu bearbeitende Fläche 100 in Form einer Wiese mit Rasen im Freischnittverfahren zu bearbeiten, insbesondere durch Zentrifugalkraft des Bearbeitungswerkzeugs 21 einen Schneidvorgang zu erzeugen. Des Weiteren ist das Bearbeitungswerkzeug 21 derart ausgebildet, dass das Bearbeitungswerkzeug 21 beziehungsweise seine Schneidezähne bei Berührung mit einem Hindernis ausweichen.

Der autonome mobile Grünflächenbearbeitungsroboter 20 weist ein in Fig. 2 unten offenes Schutzgehäuse 22 mit einem Seitenrand 23 auf. Der Seitenrand 23 ist ein Außenrand eines Endes einer Wandung des Schutzgehäuses 22. Das Bearbeitungswerkzeug 21 beziehungsweise ein Ende oder ein äußerster Punkt eines der Schneidezähne definiert einen Bearbeitungsbereich 28, im gezeigten Ausführungsbeispiel einen kreisförmigen Bearbeitungsbereich. Das Bearbeitungswerkzeug 21 ist derart in dem Schutzgehäuse 22 angeordnet, dass der Bearbeitungsbereich 28 vollständig in einem Sicherheitsbereich 19 des Schutzgehäuses 22 liegt. Im gezeigten Ausführungsbeispiel ist das Bearbeitungswerkzeug 21 in einem durch das Schutzgehäuse 22 definierten Aufnahmeraum 17 angeordnet, insbesondere einem glockenförmigen. Der Sicherheitsbereich 19 weist einen Sicherheitsabstand 18 zu dem Seitenrand 23 von mindestens 8 cm auf.

Außerdem weist der autonome mobile Grünflächenbearbeitungsroboter 20 vordere Laufräder 16, die schwenkbar sind, und hintere Laufräder 15 auf, die getrennt voneinander angetrieben sind. Somit kann sich der autonome mobile Grünflächenbearbeitungsroboter 20 auf der Fläche 100 selbstständig bewegen und lenken. Weiterhin weist der Grünflächenbearbeitungsroboter 20 einen nicht dargestellten Elektromotor zum Antrieb des Bearbeitungswerkszeugs 21 auf. In alternativen Ausführungsbeispielen kann der Grünflächenbearbeitungsroboter einen Verbrennungsmotor, insbesondere einen Benzinmotor, zum Antrieb des Bearbeitungswerkzeugs aufweisen. Zudem weist der Grünflächenbearbeitungsroboter 20 einen nicht dargestellten Akkumulator zur Antriebsenergieversorgung der hinteren Räder 15 und des Elektromotors zum Antrieb des Bearbeitungswerkszeugs 21 auf. In alternativen Ausführungsbeispielen kann der Grünflächenbearbeitungsroboter eine Brennstoffzelle oder einer andere Art einer Antriebsenergiequelle zur Antriebsenergieversorgung aufweisen.

Weiter weist das Grünflächenbearbeitungssystem 10 eine Basisstation 70 für den autonomen mobilen Grünflächenbearbeitungsroboter 20 auf, die hier an einem Begrenzungsrand 101 der Fläche 100 angeordnet ist, wie in Fig. 6 links oben zu erkennen. Der Begrenzungsrand 101 begrenzt oder definiert die Fläche 100. Im gezeigten Ausführungsbeispiel ist die Basisstation 70 als eine Ladestation zum Wiederaufladen, insbesondere zum automatischen, des Akkumulators des Grünflächenbearbeitungsroboters 20 ausgebildet.

Somit ermöglicht das Grünflächenbearbeitungssystem 10 in seinem Autonombetriebsmodus eine autonome Bearbeitung der Fläche 100 mittels des autonomen mobilen Grünflächenbearbeitungsroboters 20 mit seinem Bearbeitungswerkzeug 21, wie in Fig. 6 unten zu erkennen.

Das Schneidwerkzeug 30 umfasst ein Schneidelement 31, insbesondere ein rotierendes Schneidelement, im Detail einen Mähfaden 32 aus Nylon. Das Grünflächenbearbeitungssystem 10 ist derart ausgebildet, dass das Schneidwerkzeug 30 in dem Schneidbetriebsmodus derart steuerbar ist, dass eine maximale kinetische Energie Ekin beziehungsweise eine maximale Rotationsenergie Erot des Schneidelements 31 größer als 10 Joule ist. Somit ist das Schneidwerkzeug 30 ein rotierendes Schneidwerkzeug und dazu ausgebildet, die Fläche 100 beziehungsweise ihren Begrenzungsrand 101 im Freischnittverfahren zu schneiden, insbesondere durch Zentrifugalkraft des Schneidwerkzeugs 30 einen Schneidvorgang zu erzeugen. Des Weiteren ist das Schneidwerkzeug 30 derart ausgebildet, dass das Schneidwerkzeug 30 beziehungsweise sein Schneidelement 31 in Form des Mähfadens 32 bei Berührung mit einem Hindernis ausweicht. Das Schneidwerkzeug 30 des gezeigten Ausführungsbeispiels kann als Motorsense oder Freischneider bezeichnet werden.

Das Schneidwerkzeug 30 beziehungsweise ein Ende oder ein äußerster Punkt des Schneidelements 31 beziehungsweise des Mähfadens 32 definiert einen Schneidbereich 35, im gezeigten Ausführungsbeispiel einen kreisförmigen Schneidbereich. In dem Schneidbetriebsmodus ist das Schneidwerkzeug 30 derart an dem autonomen mobilen Grünflächenbearbeitungsroboter 20 befestigt, dass der Schneidbereich 35 vollständig außerhalb des Sicherheitsbereichs 19 liegt. Im gezeigten Ausführungsbeispiel ist das Schneidwerkzeug 30 vollständig außerhalb des Seitenrands 23 des Schutzgehäuses 22 seitlich angeordnet, wie in Fig. 1 links vorne und in Fig. 2 rechts vorne zu erkennen.

Somit ermöglicht das Grünflächenbearbeitungssystem 10 in seinem Schneidbetriebsmodus ein Schneiden der Fläche 100 am Begrenzungsrand 101, insbesondere eines Rasenrands, mittels des Schneidwerkzeugs 30, wie in Fig. 6 oben zu erkennen. Ein Bearbeiten der Fläche 100 am Begrenzungsrand 101 mittels des Bearbeitungswerkzeugs 21 sowohl im Autonombetriebsmodus als auch im Schneidbetriebsmodus kann aufgrund der Anordnung des Bearbeitungswerkzeugs 21 mit seinem Bearbeitungsbereich 28 in dem Sicherheitsbereich 19 des Schutzgehäuses 22 mit dem Sicherheitsabstand 18 verhindert oder nicht möglich sein. Dies kann insbesondere dann der Fall sein, wenn der Begrenzungsrand 101 durch eine Grenzwand und/oder einen Grenzzaun definiert ist.

Im Detail weist das Grünflächenbearbeitungssystem 10 einen Schneidwerkzeugsaufsatz 33 auf. Der Schneidwerkzeugsaufsatz 33 umfasst das Schneidwerkzeug 30. Der autonome mobile Grünflächenbearbeitungsroboter 20 und der Schneidwerkzeugsaufsatz 33 sind zur lösbaren Befestigung des Schneidwerkzeugsaufsatzes 33 an dem Grünflächenbearbeitungsroboter 20 ausgebildet. Der Schneidwerkzeugsaufsatz 33 des gezeigten Ausführungsbeispiels kann als Motorsensenaufsatz oder Freischneideraufsatz bezeichnet werden.

Des Weiteren weist der Schneidwerkzeugsaufsatz 33 einen nicht dargestellten Elektromotor zum Antrieb des Schneidwerkszeugs 30 auf. In alternativen Ausführungsbeispielen kann der Schneidwerkzeugsaufsatz einen Verbrennungsmotor, insbesondere einen Benzinmotor, zum Antrieb des Schneidwerkzeugs aufweisen. Weiter alternativ kann das Schneidwerkzeug mittels des Motors zum Antrieb des Bearbeitungswerkszeugs angetrieben sein. Im gezeigten Ausführungsbeispiel dient der nicht dargestellte Akkumulator des Grünflächenbearbeitungsroboters 20 zur Antriebsenergieversorgung des Elektromotors zum Antrieb des Schneidwerkszeugs im Schneidbetriebsmodus. In alternativen Ausführungsformen kann der Schneidwerkzeugsaufsatz eine eigene Antriebsenergiequelle zur Antriebsenergieversorgung aufweisen. Zudem weist der Schneidwerkzeugsaufsatz 33 einen Benutzerschutz 34 zum Schutz des Benutzers 200 vor von dem Schneidwerkzeug 30 abgeschnittenem und/oder weggeschleudertem Gut auf.

Die Betriebsmodusumschalteinrichtung 50 ist dazu ausgebildet, eine Befestigung des Schneidwerkzeugsaufsatzes 33 an dem autonomen mobilen Grünflächenbearbeitungsroboter 20 zu erkennen und in Abhängigkeit davon das Grünflächenbearbeitungssystem 10 in den Schneidbetriebsmodus umzuschalten. Des Weiteren ist die Betriebsmodusumschalteinrichtung 50 dazu ausgebildet, eine Lösung des Schneidwerkzeugsaufsatzes 33 von dem Grünflächenbearbeitungsroboter 20 zu erkennen und in Abhängigkeit davon das Grünflächenbearbeitungssystem 10 in den Autonombetriebsmodus umzuschalten.

Die Benutzersteuerungseinrichtung 40 umfasst eine Drahtfernsteuerung 41, wie in Fig. 1 bis 4 zu erkennen. Die Drahtfernsteuerung 41 ist zur Drahtsteuerverbindung mit dem autonomen mobilen Grünflächenbearbeitungsroboter 20 ausgebildet. Im gezeigten Ausführungsbeispiel weist die Drahtfernsteuerung 41 die Drahtsteuerverbindung mit dem Grünflächenbearbeitungsroboter 20 dauerhaft auf. Des Weiteren ist die Drahtfernsteuerung 41 zwischen einer Steuerstellung, wie in Fig. 1, 2 und 4 zu erkennen, und einer Lagerstellung, wie in Fig. 3 zu erkennen, beweglich. Zusätzlich oder alternativ zu der Umschaltung aufgrund der Befestigung des Schneidwerkzeugsaufsatzes an dem Grünflächenbearbeitungsroboter und der Lösung von diesem, kann die Betriebsmodusumschalteinrichtung dazu ausgebildet sein, die Steuerstellung zu erkennen und in Abhängigkeit davon das Grünflächenbearbeitungssystem in den Schneidbetriebsmodus umzuschalten und die Lagerstellung zu erkennen und in Abhängigkeit davon das Grünflächenbearbeitungssystem in den Autonombetriebsmodus umzuschalten. Die Betriebsmodusumschalteinrichtung 50 und die Benutzersteuerungseinrichtung 40 beziehungsweise ihre Drahtfernsteuerung 41 stehen in Signalverbindung miteinander, wie in Fig. 1, 3 und 4 durch gestrichelte Linien angedeutet. Im Detail umfasst das Grünflächenbearbeitungssystem 10 eine an dem Grünflächenbearbeitungsroboter 20 befestigte und zwischen einer Steuerstellung und einer Lagerstellung verstellbare Schiebestange 44. Die Drahtfernsteuerung 41 ist an der Schiebestange 44 befestigt. Die Betriebsmodusumschalteinrichtung kann dazu ausgebildet sein, eine Verstellung der Schiebestange zu erkennen.

Zusätzlich umfasst die Benutzersteuerungseinrichtung 40 einen Fernsteuerungssender 42, wie in Fig. 5 zu erkennen. Im gezeigten Ausführungsbeispiel umfasst die Benutzersteuerungseinrichtung 40 ein Smartphone. Der autonome mobile Grünflächenbearbeitungsroboter 20 umfasst einen Fernsteuerungsempfänger 43. Der Fernsteuerungssender 42 und der Fernsteuerungsempfänger 43 sind zu einer drahtlosen Steuerverbindung ausgebildet, insbesondere mittelbar über die Basisstation 70. Weiter zusätzlich oder alternativ zu der Umschaltung aufgrund der Lösung des Schneidwerkzeugsaufsatzes von dem Grünflächenbearbeitungsroboter, kann die Betriebsmodusumschalteinrichtung dazu ausgebildet sein, eine Unterbrechung der drahtlosen Steuerverbindung zu erkennen und in Abhängigkeit davon das Grünflächenbearbeitungssystem in den Autonombetriebsmodus umzuschalten. Die Betriebsmodusumschalteinrichtung 50 und der Fernsteuerungsempfänger 43 stehen in Signalverbindung miteinander, wie in Fig. 1, 3 und 4 durch gestrichelte Linien angedeutet. In alternativen Ausführungsbeispielen kann es ausreichen, dass die Benutzersteuerungseinrichtung nur die Drahtfernsteuerung oder nur den Fernsteuerungssender umfassen kann.

Der autonome mobile Grünflächenbearbeitungsroboter 20 und das Schneidwerkzeug 30 beziehungsweise der Schneidwerkzeugsaufsatz 33 stehen in Signalverbindung miteinander, wie in Fig. 1, 3 und 4 durch gestrichelte Linien angedeutet.

In dem Schneidbetriebsmodus kann der Benutzer 200 den Grünflächenbearbeitungsroboter 20 mit seinem Bearbeitungswerkzeug 21 und dem an ihm befestigten Schneidwerkzeug 30 mittels der Schiebestange 44 in der Steuerstellung schieben und lenken und mittels der Drahtfernsteuerung 41 steuern, wie in Fig. 6 oben zu erkennen. Zusätzlich oder alternativ kann der Benutzer den Grünflächenbearbeitungsroboter mit seinem Bearbeitungswerkzeug und dem an ihm befestigten Schneidwerkzeug mittels des Fernsteuerungssenders 42 steuern, insbesondere eine Bewegung des Grünflächenbearbeitungsroboters, einen Betrieb des Bearbeitungswerkzeugs und einen Betrieb des Schneidwerkzeugs.

Weiterhin weist das Grünflächenbearbeitungssystem 10 ein Positionsbestimmungsgerät 24 zur Bestimmung von Positionskoordinaten x, y auf. Das Positionsbestimmungsgerät 24 ist an dem autonomen mobilen Grünflächenbearbeitungsroboter 20 befestigt. Außerdem weist das Grünflächenbearbeitungssystem 10 ein Positionsaufzeichnungsgerät 60 auf. Im gezeigten Ausführungsbeispiel umfasst der Grünflächenbearbeitungsroboter 20 das Positionsaufzeichnungsgerät 60. Das Positionsaufzeichnungsgerät 60 ist dazu ausgebildet, während der Grünflächenbearbeitungsroboter 20 und das an dem Grünflächenbearbeitungsroboter 20 befestigte Schneidwerkzeug 30 in dem Schneidbetriebsmodus entlang mindestens eines Abschnitts 102 des Begrenzungsrands 101 der Fläche 100 gesteuert werden, eine Abfolge von Positionskoordinaten x, y des Abschnitts 102 des Begrenzungsrands 101 aufzuzeichnen. Das Positionsbestimmungsgerät 24 und das Positionsaufzeichnungsgerät 60 stehen in Signalverbindung miteinander, wie in Fig. 1, 3 und 4 zu erkennen.

Somit ermöglicht das Grünflächenbearbeitungssystem 10 ein Erfassen der Abfolge von Positionskoordinaten x, y mindestens des Abschnitts 102 des Begrenzungsrands 101 der Fläche 100 mittels des Positionsbestimmungsgeräts 24 und des Positionsaufzeichnungsgeräts 60.

Fig. 7 zeigt ein erfindungsgemäßes Verfahren zum Erfassen mindestens des Abschnitts 102 des Begrenzungsrands 101 der Fläche 100 mittels des zuvor beschriebenen Grünflächenbearbeitungssystems 10 mit dem Positionsbestimmungsgerät 24 und dem Positionsaufzeichnungsgerät 60.

In einem Schritt a) wird der autonome mobilen Grünflächenbearbeitungsroboter 20 mit seinem Bearbeitungswerkzeug 21 und dem an dem Grünflächenbearbeitungsroboter 20 befestigten Schneidwerkzeug 30 in dem Schneidbetriebsmodus entlang des Abschnitts 102 mittels der Benutzersteuerungseinrichtung 40 durch den Benutzer 200 gesteuert. In einem Schritt b) werden Positionskoordinaten x, y mittels des Positionsbestimmungsgeräts 24 während des Steuerns bestimmt. In einem Schritt c) wird die Abfolge von Positionskoordinaten x, y mindestens des Abschnitts 102 des Begrenzungsrands 101 mittels des Positionsaufzeichnungsgeräts 60 aufgezeichnet.

Somit ermöglicht das Verfahren einerseits ein Erfassen der Abfolge von Positionskoordinaten x, y mindestens des Abschnitts 102 des Begrenzungsrands 101 der Fläche 100 mittels des Positionsbestimmungsgeräts 24 und des Positionsaufzeichnungsgeräts 60, wie in Fig. 6 oben zu erkennen. Andererseits ermöglicht das Verfahren ein Schneiden der Fläche 100 am Begrenzungsrand 101 mittels des Schneidwerkzeugs 30.

Im Detail umfasst das Positionsbestimmungsgerät 24 einen Satelliten-Positionsbestimmungsempfänger 26 zur Bestimmung von Positionskoordinaten x, y. Im gezeigten Ausführungsbeispiel weist die Basisstation 70 einen weiteren Satelliten-Positionsbestimmungsempfänger 72 auf. Der weitere Satelliten-Positionsbestimmungsempfänger 72 ist stationär im Bereich der Fläche 100 angeordnet. Der Satelliten-Positionsbestimmungsempfänger 26 und der weitere Satelliten-Positionsbestimmungsempfänger 72 sind dazu ausgebildet, in Signalverbindung miteinander zu stehen, um eine relativ genaue Positionsbestimmung zu ermöglichen. Zusätzlich umfasst das Positionsbestimmungsgerät 24 ein lokales Positionierungssystemgerät 27 zur Bestimmung von Positionskoordinaten x, y. Im gezeigten Ausführungsbeispiel ist das lokale Positionierungssystemgerät 27 ein passives Element. Des Weiteren umfasst das Grünflächenbearbeitungssystem 10 aktive Elemente 71a, b, c, d, e, f, g, h, die in Ecken der Fläche 100 angeordnet sind. Das lokale Positionierungssystemgerät 27 und die aktiven Elemente 71a-h sind dazu ausgebildet, miteinander zusammenzuwirken, um eine Positionsbestimmung zu ermöglichen. In alternativen Ausführungsbeispielen kann es ausreichen, dass das Positionsbestimmungsgerät nur den Satelliten-Positionsbestimmungsempfänger oder nur das lokale Positionierungssystemgerät umfassen kann.

Des Weiteren umfasst der autonome mobile Grünflächenbearbeitungsroboter 20 das Positionsbestimmungsgerät 24. Das Grünflächenbearbeitungssystem 10 weist eine Steuereinheit 25 auf. Im gezeigten Ausführungsbeispiel umfasst der Grünflächenbearbeitungsroboter 20 die Steuereinheit 25. Die Steuereinheit 25 ist dazu ausgebildet, eine Bewegung des Grünflächenbearbeitungsroboters 20 im Autonombetriebsmodus auf der Fläche 100 in Abhängigkeit von der aufgezeichneten Abfolge von Positionskoordinaten x, y des Begrenzungsrands 101 derart zu steuern, dass der Grünflächenbearbeitungsroboter 20 auf der Fläche 100 bleibt, insbesondere innerhalb des Begrenzungsrands 101, wie in Fig. 6 unten zu erkennen. Das Positionsbestimmungsgerät 24, das Positionsaufzeichnungsgerät 60 und die Steuereinheit 25 stehen in Signalverbindung miteinander, wie in Fig. 1, 3 und 4 zu erkennen. Außerdem stehen die Steuereinheit 25 und die Betriebsmodusumschalteinrichtung 50 in Signalverbindung miteinander, wie in Fig. 1, 3 und 4 durch gestrichelte Linien angedeutet.

Wie die gezeigten und oben erläuterten Ausführungsbeispiele deutlich machen, stellt die Erfindung ein vorteilhaftes Grünflächenbearbeitungssystem, das verbesserte Eigenschaften aufweist, insbesondere mehr Funktionalitäten, sowie ein Verfahren zum Erfassen mindestens eines Abschnitts eines Begrenzungsrands einer zu bearbeitenden Fläche mittels eines solchen Grünflächenbearbeitungssystems bereit. Insbesondere kann der Schneidbetriebsmodus ermöglichen, die zu bearbeitende Fläche auf eine Art und Weise zu bearbeiten, wie es im Autonombetriebsmodus nicht möglich, erlaubt und/oder zulässig sein kann und/oder darf.

## Patentansprüche

1. Grünflächenbearbeitungssystem (10) aufweisend:
- einen autonomen mobilen Grünflächenbearbeitungsroboter (20) mit einem Bearbeitungswerkzeug (21),
- ein von dem Bearbeitungswerkzeug verschiedenes Schneidwerkzeug (30),
- wobei der Grünflächenbearbeitungsroboter und das Schneidwerkzeug zur Befestigung des Schneidwerkzeugs an dem Grünflächenbearbeitungsroboter ausgebildet sind,
- eine Benutzersteuerungseinrichtung (40),
- einen Autonombetriebsmodus und einen Schneidbetriebsmodus, wobei in dem Autonombetriebsmodus der autonome mobile Grünflächenbearbeitungsroboter mit seinem Bearbeitungswerkzeug autonom arbeitet und das Schneidwerkzeug außer Betrieb gesetzt ist und
wobei in dem Schneidbetriebsmodus das Schneidwerkzeug an dem Grünflächenbearbeitungsroboter befestigt und betriebsbereit ist und der Grünflächenbearbeitungsroboter mit seinem Bearbeitungswerkzeug und das Schneidwerkzeug mittels der Benutzersteuerungseinrichtung durch einen Benutzer gesteuert sind, und
- eine Betriebsmodusumschalteinrichtung (50) zur Umschaltung zwischen dem Autonombetriebsmodus und dem Schneidbetriebsmodus,
- wobei das Grünflächenbearbeitungssystem einen Schneidwerkzeugsaufsatz (33) aufweist, wobei der Schneidwerkzeugsaufsatz das Schneidwerkzeug (30) umfasst, und
- wobei der autonome mobile Grünflächenbearbeitungsroboter (20) und der Schneidwerkzeugsaufsatz zur lösbaren Befestigung des Schneidwerkzeugsaufsatzes an dem Grünflächenbearbeitungsroboter ausgebildet sind,
- wobei die Betriebsmodusumschalteinrichtung (50) dazu ausgebildet ist, eine Befestigung des Schneidwerkzeugsaufsatzes (33) an dem autonomen mobilen Grünflächenbearbeitungsroboter (20) zu erkennen und das Grünflächenbearbeitungssystem (10) in den Schneidbetriebsmodus umzuschalten und/oder
eine Lösung des Schneidwerkzeugsaufsatzes von dem Grünflächenbearbeitungsroboter zu erkennen und das Grünflächenbearbeitungssystem in den Autonombetriebsmodus umzuschalten.

2. Grünflächenbearbeitungssystem (10) nach Anspruch 1,
- wobei das Schneidwerkzeug (30) mindestens ein Schneidelement (31) umfasst und das Grünflächenbearbeitungssystem (10) derart ausgebildet ist, dass das Schneidwerkzeug in dem Schneidbetriebsmodus derart steuerbar ist, dass eine maximale kinetische Energie (Ekin) des Schneidelements größer als 10 Joule ist.

3. Grünflächenbearbeitungssystem (10) nach Anspruch 1 oder 2,
- wobei das Schneidwerkzeug (30) mindestens einen Mähfaden (32), mindestens ein Kunststoffmesser, mindestens ein Metallmesser oder ein Metallschneideblatt mit mindestens einer Schneidkante und/oder mit mindestens einem Schneidezahn umfasst.

4. Grünflächenbearbeitungssystem (10) nach einem der vorhergehenden Ansprüche,
- wobei der autonome mobile Grünflächenbearbeitungsroboter (20) als ein Rasenmähroboter ausgebildet ist und das Bearbeitungswerkzeug (21) als ein Rasenmähwerkzeug ausgebildet ist.

5. Grünflächenbearbeitungssystem (10) nach einem der vorhergehenden Ansprüche,
- wobei der autonome mobile Grünflächenbearbeitungsroboter (20) ein offenes Schutzgehäuse (22) mit einem Seitenrand (23) aufweist,
- wobei das Bearbeitungswerkzeug (21) einen Bearbeitungsbereich (28) definiert und derart in dem Schutzgehäuse angeordnet ist, dass der Bearbeitungsbereich in einem Sicherheitsbereich (19) des Schutzgehäuses liegt, wobei der Sicherheitsbereich einen Sicherheitsabstand (18) zu dem Seitenrand aufweist.

6. Grünflächenbearbeitungssystem (10) nach Anspruch 5,
- wobei das Schneidwerkzeug (30) einen Schneidbereich (35) definiert und
- wobei in dem Schneidbetriebsmodus das Schneidwerkzeug derart an dem autonomen mobilen Grünflächenbearbeitungsroboter (20) befestigt ist, dass der Schneidbereich mindestens teilweise außerhalb des Sicherheitsbereichs (19) liegt.

7. Grünflächenbearbeitungssystem (10) nach einem der vorhergehenden Ansprüche,
- wobei die Benutzersteuerungseinrichtung (40) eine Drahtfernsteuerung (41) umfasst, wobei die Drahtfernsteuerung zur Drahtsteuerverbindung mit dem autonomen mobilen Grünflächenbearbeitungsroboter (20) und/oder dem Schneidwerkzeug ausgebildet ist, und/oder
- wobei die Benutzersteuerungseinrichtung (40) einen drahtlosen Fernsteuerungssender (42) umfasst und wobei der autonome mobile Grünflächenbearbeitungsroboter (20) und/oder das Schneidwerkzeug einen drahtlosen Fernsteuerungsempfänger (43) umfasst, wobei der Fernsteuerungssender und der Fernsteuerungsempfänger zu einer drahtlosen Steuerverbindung ausgebildet sind.

8. Grünflächenbearbeitungssystem (10) nach Anspruch 7,
- wobei die Drahtfernsteuerung (41) zwischen einer Steuerstellung und einer Lagerstellung beweglich ist, wobei die Betriebsmodusumschalteinrichtung (50) dazu ausgebildet ist, die Steuerstellung zu erkennen und das Grünflächenbearbeitungssystem (10) in den Schneidbetriebsmodus umzuschalten und/oder die Lagerstellung zu erkennen und das Grünflächenbearbeitungssystem in den Autonombetriebsmodus umzuschalten, und/oder
- wobei die Betriebsmodusumschalteinrichtung dazu ausgebildet ist, eine Unterbrechung der drahtlosen Steuerverbindung zu erkennen und das Grünflächenbearbeitungssystem in den Autonombetriebsmodus umzuschalten.

9. Grünflächenbearbeitungssystem (10) nach einem der vorhergehenden Ansprüche,
- wobei das Grünflächenbearbeitungssystem ein Positionsbestimmungsgerät (24) zur Bestimmung von Positionskoordinaten (x, y) aufweist, wobei das Positionsbestimmungsgerät an dem autonomen mobilen Grünflächenbearbeitungsroboter (20) und/oder an dem Schneidwerkzeug befestigt ist, und
- wobei das Grünflächenbearbeitungssystem (10) ein Positionsaufzeichnungsgerät (60) aufweist, wobei das Positionsaufzeichnungsgerät dazu ausgebildet ist, während der Grünflächenbearbeitungsroboter und das an dem Grünflächenbearbeitungsroboter befestigte Schneidwerkzeug (30) in dem Schneidbetriebsmodus entlang eines Begrenzungsrands (101) einer zu bearbeitenden Fläche (100) gesteuert werden, eine Abfolge von Positionskoordinaten des Begrenzungsrands aufzuzeichnen.

10. Grünflächenbearbeitungssystem (10) nach Anspruch 9,
- wobei der autonome mobile Grünflächenbearbeitungsroboter (20) das Positionsbestimmungsgerät (24) umfasst und das Grünflächenbearbeitungssystem (10) eine Steuereinheit (25) aufweist, wobei die Steuereinheit dazu ausgebildet ist, eine Bewegung des Grünflächenbearbeitungsroboters (20) im Autonombetriebsmodus auf der zu bearbeitenden Fläche (100) in Abhängigkeit von der aufgezeichneten Abfolge von Positionskoordinaten (x, y) des Begrenzungsrands (101) derart zu steuern, dass der Grünflächenbearbeitungsroboter auf der zu bearbeitenden Fläche bleibt.

11. Grünflächenbearbeitungssystem (10) nach Anspruch 9 oder 10,
- wobei das Positionsbestimmungsgerät (24) einen Satelliten-Positionsbestimmungsempfänger (26) zur Bestimmung von Positionskoordinaten (x, y) umfasst und/oder
- wobei das Positionsbestimmungsgerät (24) ein lokales Positionierungssystemgerät (27) zur Bestimmung von Positionskoordinaten (x, y) umfasst.

12. Verfahren zum Erfassen mindestens eines Abschnitts (102) eines Begrenzungsrands (101) einer zu bearbeitenden Fläche (100) mittels eines Grünflächenbearbeitungssystems (10), insbesondere nach einem der vorhergehenden Ansprüche, wobei das Grünflächenbearbeitungssystem (10) aufweist:
- einen autonomen mobilen Grünflächenbearbeitungsroboter (20) mit einem Bearbeitungswerkzeug (21),
- ein von dem Bearbeitungswerkzeug verschiedenes Schneidwerkzeug (30),
- wobei der Grünflächenbearbeitungsroboter und das Schneidwerkzeug zur Befestigung des Schneidwerkzeugs an dem Grünflächenbearbeitungsroboter ausgebildet sind,
- eine Benutzersteuerungseinrichtung (40),
- einen Autonombetriebsmodus und einen Schneidbetriebsmodus, wobei in dem Autonombetriebsmodus der autonome mobile Grünflächenbearbeitungsroboter mit seinem Bearbeitungswerkzeug autonom arbeitet und das Schneidwerkzeug außer Betrieb gesetzt ist und
wobei in dem Schneidbetriebsmodus das Schneidwerkzeug an dem Grünflächenbearbeitungsroboter befestigt und betriebsbereit ist und der Grünflächenbearbeitungsroboter mit seinem Bearbeitungswerkzeug und das Schneidwerkzeug mittels der Benutzersteuerungseinrichtung durch einen Benutzer gesteuert sind, und
- eine Betriebsmodusumschalteinrichtung (50) zur Umschaltung zwischen dem Autonombetriebsmodus und dem Schneidbetriebsmodus,
- wobei das Grünflächenbearbeitungssystem ein Positionsbestimmungsgerät (24) zur Bestimmung von Positionskoordinaten (x, y) aufweist, wobei das Positionsbestimmungsgerät an dem autonomen mobilen Grünflächenbearbeitungsroboter (20) und/oder an dem Schneidwerkzeug befestigt ist, und
- wobei das Grünflächenbearbeitungssystem (10) ein Positionsaufzeichnungsgerät (60) aufweist, wobei das Positionsaufzeichnungsgerät dazu ausgebildet ist, während der Grünflächenbearbeitungsroboter und das an dem Grünflächenbearbeitungsroboter befestigte Schneidwerkzeug (30) in dem Schneidbetriebsmodus entlang eines Begrenzungsrands (101) einer zu bearbeitenden Fläche (100) gesteuert werden, eine Abfolge von Positionskoordinaten des Begrenzungsrands aufzuzeichnen,
- wobei das Verfahren die Schritte aufweist:
a) Steuern des autonomen mobilen Grünflächenbearbeitungsroboters (20) mit seinem Bearbeitungswerkzeug (21) und des an dem Grünflächenbearbeitungsroboter befestigten Schneidwerkzeugs (30) in dem Schneidbetriebsmodus entlang des Abschnitts (102),
b) Bestimmen von Positionskoordinaten (x, y) mittels des Positionsbestimmungsgeräts (24) während des Steuerns und
c) Aufzeichnen der Abfolge von Positionskoordinaten des Begrenzungsrands mittels des Positionsaufzeichnungsgeräts (60).

## Claims

1. Green area maintenance system (10), comprising:
- an autonomous mobile green area maintenance robot (20) having a treatment tool (21),
- a cutting tool (30) differing from the treatment tool,
- wherein the green area maintenance robot and the cutting tool are configured to allow fixing of the cutting tool to the green area maintenance robot,
- a user control device (40),
- an autonomous operation mode and a cutting operation mode, wherein in the autonomous operation mode the autonomous mobile green area maintenance robot with its treatment tool operates autonomously and the cutting tool is set out of operation, and
wherein, in the cutting operation mode, the cutting tool is fixed to the green area maintenance robot and operable, and the green area maintenance robot with its treatment tool and the cutting tool are controlled by a user by means of the user control device, and
- an operation mode switching device (50) for switching between the autonomous operation mode and the cutting operation mode,
- wherein the green area maintenance system includes a cutting tool attachment part (33), wherein the cutting tool attachment part comprises the cutting tool (30), and
- wherein the autonomous mobile green area maintenance robot (20) and the cutting tool attachment part are configured to allow removable fixing of the cutting tool attachment part on the green area maintenance robot,
- wherein the operation mode switching device (50) is configured to detect fixation of the cutting tool attachment part (33) on the autonomous mobile green area maintenance robot (20) and to switch the green area maintenance system (10) over to the cutting operation mode, and/or
to detect a removal of the cutting tool attachment part from the green area maintenance robot and to switch the green area maintenance system over to the autonomous operation mode.

2. Green area maintenance system (10) according to claim 1,
- wherein the cutting tool (30) comprises at least one cutting element (31) and the green area maintenance system (10) is configured such that the cutting tool in the cutting operation mode is controllable such that a maximum kinetic energy (Ekin) of the cutting element is greater than 10 Joules.

3. Green area maintenance system (10) according to claim 1 or 2,
- wherein the cutting tool (30) comprises at least one mowing line (32), at least one plastic knife, at least one metallic knife or a metallic cutting blade having at least one cutting edge and/or having at least one cutting tooth.

4. Green area maintenance system (10) according to any of the preceding claims,
- wherein the autonomous mobile green area maintenance robot (20) is a lawn mower robot and the treatment tool (21) is a lawn mower tool.

5. Green area maintenance system (10) according to any of the preceding claims,
- wherein the autonomous mobile green area maintenance robot (20) has an open protective housing (22) with a lateral rim (23),
- wherein the treatment tool (21) defines a treatment zone (28) and is arranged within the protective housing such that the treatment zone is located in a safety zone (19) of the protective housing, wherein the safety zone has a safety distance (18) to the lateral rim.

6. Green area maintenance system (10) according to claim 5,
- wherein the cutting tool (30) defines a cutting zone (35), and
- wherein, in the cutting operation mode, the cutting tool is fixed to the autonomous mobile green area maintenance robot (20) such that the cutting zone is located at least partially beyond the safety zone (19).

7. Green area maintenance system (10) according to any of the preceding claims,
- wherein the user control device (40) comprises a wired remote control (41), wherein the wired remote control is configured to wired control connection to the autonomous mobile green area maintenance robot (20) and/or to the cutting tool, and/or
- wherein the user control device (40) comprises a wireless remote control transmitter (42), and wherein the autonomous mobile green area maintenance robot (20) and/or the cutting tool comprises a wireless remote control receiver (43), wherein the remote control transmitter and the remote control receiver are configured to wireless control connection.

8. Green area maintenance system (10) according to claim 7,
- wherein the wired remote control (41) is movable between a control position and a storage position, wherein the operation mode switching device (50) is configured to detect the control position and to switch the green area maintenance system (10) over to the cutting operation mode, and/or to detect the storage position and to switch the green area maintenance system over to the autonomous operation mode, and/or
- wherein the operation mode switching device is configured to detect an interruption of the wireless control connection and to switch the green area maintenance system over to the autonomous operation mode.

9. Green area maintenance system (10) according to any of the preceding claims,
- wherein the green area maintenance system includes a position determination device (24) for determining of position coordinates (x, y), wherein the position determination device is fixed to the autonomous mobile green area maintenance robot (20) and/or to the cutting tool, and
- wherein the green area maintenance system (10) includes a position recording device (60), wherein the position recording device is configured to record a sequence of position coordinates of a boundary edge (101) of an area (100) to be treated, while the green area maintenance robot and the cutting tool (30) fixed to the green area maintenance robot in the cutting operation mode are controlled along the boundary edge.

10. Green area maintenance system (10) according to claim 9,
- wherein the autonomous mobile green area maintenance robot (20) comprises the position determination device (24) and the green area maintenance system (10) includes a control unit (25), wherein the control unit is configured to control movement of the green area maintenance robot (20) in the autonomous operation mode on the area (100) to be treated as a function of the recorded sequence of position coordinates (x, y) of the boundary edge (101) such that the green area maintenance robot remains on the area to be treated.

11. Green area maintenance system (10) according to claim 9 or 10,
- wherein the position determination device (24) comprises a satellite position determination receiver (26) for determining of position coordinates (x, y), and/or
- wherein the position determination device (24) comprises a local positioning system device (27) for determining of position coordinates (x, y).

12. Method for identifying at least a section (102) of a boundary edge (101) of an area (100) to be treated using a green area maintenance system (10), in particular according to any of the preceding claims, the green area maintenance system (10) comprising:
- an autonomous mobile green area maintenance robot (20) having a treatment tool (21),
- a cutting tool (30) differing from the treatment tool,
- wherein the green area maintenance robot and the cutting tool are configured to allow fixing of the cutting tool to the green area maintenance robot,
- a user control device (40),
- an autonomous operation mode and a cutting operation mode, wherein in the autonomous operation mode the autonomous mobile green area maintenance robot with its treatment tool operates autonomously and the cutting tool is set out of operation, and wherein, in the cutting operation mode, the cutting tool is fixed to the green area maintenance robot and operable, and the green area maintenance robot with its treatment tool and the cutting tool are controlled by a user by means of the user control device, and
- an operation mode switching device (50) for switching between the autonomous operation mode and the cutting operation mode,
- wherein the green area maintenance system includes a position determination device (24) for determining of position coordinates (x, y), wherein the position determination device is fixed to the autonomous mobile green area maintenance robot (20) and/or to the cutting tool, and
- wherein the green area maintenance system (10) includes a position recording device (60), wherein the position recording device is configured to record a sequence of position coordinates of a boundary edge (101) of an area (100) to be treated, while the green area maintenance robot and the cutting tool (30) fixed to the green area maintenance robot in the cutting operation mode are controlled along the boundary edge,
- the method comprising the steps:
a) controlling the autonomous mobile green area maintenance robot (20) having its treatment tool (21) and the cutting tool (30) fixed to the green area maintenance robot in the cutting operation mode along the section (102),
b) determining of position coordinates (x, y) using the position determination device (24) during the controlling procedure, and
c) recording the sequence of position coordinates of the boundary edge using the position recording device (60).

## Revendications

1. Système de traitement d'espaces verts (10), présentant :
- un robot de traitement d'espaces verts mobile autonome (20) doté d'un outil de traitement (21),
- un outil de coupe (30) différent de l'outil de traitement,
- le robot de traitement d'espaces verts et l'outil de coupe étant réalisés pour la fixation de l'outil de coupe au robot de traitement d'espaces verts,
- un dispositif de commande utilisateur (40),
- un mode de fonctionnement autonome et un mode de fonctionnement de coupe, dans lequel, dans le mode de fonctionnement autonome, le robot de traitement d'espaces verts mobile autonome avec son outil de traitement fonctionne de manière autonome et l'outil de coupe est mis hors service, et
dans lequel, dans le mode de fonctionnement de coupe, l'outil de coupe est fixé au robot de traitement d'espaces verts et est prêt à l'emploi, et le robot de traitement d'espaces verts avec son outil de traitement et l'outil de coupe sont commandés par un utilisateur au moyen du dispositif de commande utilisateur, et
- un dispositif de commutation de mode de fonctionnement (50) pour commuter entre le mode de fonctionnement autonome et le mode de fonctionnement de coupe,
- le système de traitement d'espaces verts présentant un capot d'outil de coupe (33), le capot d'outil de coupe comprenant l'outil de coupe (30), et
- le robot de traitement d'espaces verts mobile autonome (20) et le capot d'outil de coupe étant réalisés pour la fixation amovible du capot d'outil de coupe au robot de traitement d'espaces verts,
- le dispositif de commutation de mode de fonctionnement (50) étant réalisé pour identifier une fixation du capot d'outil de coupe (33) au robot de traitement d'espaces verts mobile autonome (20), et pour faire passer le système de traitement d'espaces verts (10) au mode de fonctionnement de coupe, et/ou
pour identifier un détachement du capot d'outil de coupe du robot de traitement d'espaces verts, et pour faire passer le système de traitement d'espaces verts au mode de fonctionnement autonome.

2. Système de traitement d'espaces verts (10) selon la revendication 1,
- l'outil de coupe (30) comprenant au moins un élément coupant (31), et le système de traitement d'espaces verts (10) étant réalisé de telle sorte que l'outil de coupe peut être commandé dans le mode de fonctionnement de coupe de telle sorte qu'une énergie cinétique maximale (Ekin) de l'élément coupant est supérieure à 10 joules.

3. Système de traitement d'espaces verts (10) selon la revendication 1 ou 2,
- l'outil de coupe (30) comprenant au moins un fil de coupe (32), au moins un couteau en matière synthétique, au moins un couteau métallique ou une lame tranchante métallique dotée d'au moins un bord tranchant et/ou d'au moins une dent de coupe.

4. Système de traitement d'espaces verts (10) selon l'une quelconque des revendications précédentes,
- le robot de traitement d'espaces verts mobile autonome (20) étant réalisé sous la forme d'un robot-tondeuse à gazon, et l'outil de traitement (21) étant réalisé sous la forme d'un outil de tondeuse à gazon.

5. Système de traitement d'espaces verts (10) selon l'une quelconque des revendications précédentes,
- le robot de traitement d'espaces verts mobile autonome (20) présentant un carter de protection ouvert (22) doté d'un bord latéral (23),
- l'outil de traitement (21) définissant une zone de traitement (28) et étant disposé dans le carter de protection de telle sorte que la zone de traitement se trouve dans une zone de sécurité (19) du carter de protection, la zone de sécurité présentant une distance de sécurité (18) par rapport au bord latéral.

6. Système de traitement d'espaces verts (10) selon la revendication 5,
- l'outil de coupe (30) définissant une zone de coupe (35), et
- dans le mode de fonctionnement de coupe, l'outil de coupe étant fixé au robot de traitement d'espaces verts mobile autonome (20) de telle sorte que la zone de coupe se trouve au moins partiellement à l'extérieur de la zone de sécurité (19).

7. Système de traitement d'espaces verts (10) selon l'une quelconque des revendications précédentes,
- le dispositif de commande utilisateur (40) comprenant une télécommande filaire (41), la télécommande filaire étant réalisée pour la connexion de commande filaire au robot de traitement d'espaces verts mobile autonome (20) et/ou à l'outil de coupe, et/ou
- le dispositif de commande utilisateur (40) comprenant un émetteur de télécommande sans fil (42), et le robot de traitement d'espaces verts mobile autonome (20) et/ou l'outil de coupe comprenant un récepteur de télécommande sans fil (43), l'émetteur de télécommande et le récepteur de télécommande étant réalisés pour une connexion de commande sans fil.

8. Système de traitement d'espaces verts (10) selon la revendication 7,
- la télécommande filaire (41) étant mobile entre une position de commande et une position de rangement, le dispositif de commutation de mode de fonctionnement (50) étant réalisé pour identifier la position de commande et pour faire passer le système de traitement d'espaces verts (10) au mode de fonctionnement de coupe, et/ou pour identifier la position de rangement et pour faire passer le système de traitement d'espaces verts au mode de fonctionnement autonome, et/ou
- le dispositif de commutation de mode de fonctionnement étant réalisé pour identifier une interruption de la connexion de commande sans fil et pour faire passer le système de traitement d'espaces verts au mode de fonctionnement autonome.

9. Système de traitement d'espaces verts (10) selon l'une quelconque des revendications précédentes,
- le système de traitement d'espaces verts présentant un appareil de détermination de position (24) pour déterminer des coordonnées de position (x, y), l'appareil de détermination de position étant fixé au robot de traitement d'espaces verts mobile autonome (20) et/ou à l'outil de coupe, et
- le système de traitement d'espaces verts (10) présentant un appareil d'enregistrement de position (60), l'appareil d'enregistrement de position étant réalisé, pendant que le robot de traitement d'espaces verts et l'outil de coupe (30) fixé au robot de traitement d'espaces verts sont commandés en mode de fonctionnement de coupe le long d'une limite (101) d'une surface à traiter (100), pour enregistrer une séquence de coordonnées de position de la limite.

10. Système de traitement d'espaces verts (10) selon la revendication 9,
- le robot de traitement d'espaces verts mobile autonome (20) comprenant l'appareil de détermination de position (24), et le système de traitement d'espaces verts (10) présentant une unité de commande (25), l'unité de commande étant réalisée pour commander un déplacement du robot de traitement d'espaces verts (20) en mode de fonctionnement autonome sur la surface à traiter (100) en fonction de la séquence enregistrée de coordonnées de position (x, y) de la limite (101) de telle sorte que le robot de traitement d'espaces verts reste sur la surface à traiter.

11. Système de traitement d'espaces verts (10) selon la revendication 9 ou 10,
- l'appareil de détermination de position (24) comprenant un récepteur satellite de détermination de position (26) pour déterminer des coordonnées de position (x, y), et/ou
- l'appareil de détermination de position (24) comprenant un appareil de système de positionnement local (27) pour déterminer des coordonnées de position (x, y).

12. Procédé de détection d'au moins une section (102) d'une limite (101) d'une surface à traiter (100) au moyen d'un système de traitement d'espaces verts (10), en particulier selon l'une quelconque des revendications précédentes, le système de traitement d'espaces verts (10) présentant :
- un robot de traitement d'espaces verts mobile autonome (20) doté d'un outil de traitement (21),
- un outil de coupe (30) différent de l'outil de traitement,
- le robot de traitement d'espaces verts et l'outil de coupe étant réalisés pour la fixation de l'outil de coupe au robot de traitement d'espaces verts,
- un dispositif de commande utilisateur (40),
- un mode de fonctionnement autonome et un mode de fonctionnement de coupe, dans lequel, dans le mode de fonctionnement autonome, le robot de traitement d'espaces verts mobile autonome avec son outil de traitement fonctionne de manière autonome, et l'outil de coupe est mis hors service, et
dans lequel, dans le mode de fonctionnement de coupe, l'outil de coupe est fixé au robot de traitement d'espaces verts et est prêt à l'emploi, et le robot de traitement d'espaces verts avec son outil de traitement et l'outil de coupe sont commandés par un utilisateur au moyen du dispositif de commande utilisateur, et
- un dispositif de commutation de mode de fonctionnement (50) pour commuter entre le mode de fonctionnement autonome et le mode de fonctionnement de coupe,
- le système de traitement d'espaces verts présentant un appareil de détermination de position (24) pour déterminer des coordonnées de position (x, y), l'appareil de détermination de position étant fixé au robot de traitement d'espaces verts mobile autonome (20) et/ou à l'outil de coupe, et
- le système de traitement d'espaces verts (10) présentant un appareil d'enregistrement de position (60), l'appareil d'enregistrement de position étant réalisé, pendant que le robot de traitement d'espaces verts et l'outil de coupe (30) fixé au robot de traitement d'espaces verts sont commandés en mode de fonctionnement de coupe le long d'une limite (101) d'une surface à traiter (100), pour enregistrer une séquence de coordonnées de position de la limite,
- le procédé présentant les étapes consistant à :
a) commander le robot de traitement d'espaces verts mobile autonome (20) avec son outil de traitement (21) et l'outil de coupe (30) fixé au robot de traitement d'espaces verts en mode de fonctionnement de coupe le long de la section (102),
b) déterminer des coordonnées de position (x, y) au moyen de l'appareil de détermination de position (24) pendant la commande, et
c) enregistrer la séquence de coordonnées de position de la limite au moyen de l'appareil d'enregistrement de position (60).
